# EUROPEAN PATENT APPLICATION

(11) **EP 1 857 258 A2**
(43) Date of publication of application: **21.11.2007**
(21) Application number: 07075372.8
(22) Date of filing: 15.05.2007
(51) Int. Cl.: B29C 67/24, B28B 13/02, E04F 15/02

(54) **Method for manufacturing conductive plates, applicable for covering floors or walls, conductive plate and injecting machine**

(30) Priority: 16.05.2006 ES 200601241
(71) Applicant: Bosnor, S.L., 0811 Canyelles Barcelona (ES)
(72) Inventor: Rodriguez, François, 08811 Canyelles (Barcelona) (ES); Blanch Andreu, Xavier, 08811 Canyelles (Barcelona) (ES)
(74) Representative: Gislon, Gabriele

(57) **Abstract**

The invention relates to a method for manufacturing conductive plates, applicable for covering floors or walls, a conductive plate and an injecting machine. The method comprises carrying out the following steps sequentially:
a) carrying out a polymer concrete mixture or mortar,
b) introducing said mortar in a hollow mold with a shape of one of said plates to be obtained when said mortar solidifies,
c) making at least one through hole through said mortar deposited in said mold, and
d) injecting an electrically conductive ink in said hole, which is at least one in number.

A second aspect of the invention relates to a conductive plate obtained by means applying the proposed method.

A third aspect of the invention relates to an ink injecting machine which can be used to carry out part of the method proposed by the first aspect of the invention.

## Description

### Field of the Art

The present invention generally relates, in a first aspect, to a method for manufacturing conductive plates, applicable for covering floors or walls, such as tiles, sheets, lining panels and particularly to a method for manufacturing polymer concrete conductive plates by means of injecting conductive ink in the plate during the production process thereof.

A conductive plate is understood as a plate which can conduct through the width of the plate manufactured according to the proposed method and in a plurality of selected areas.

A second aspect of the invention relates to a conductive plate obtained by means of applying the proposed method.

A third aspect of the invention relates to an ink injecting machine which can be used to carry out part of the method proposed by the first aspect of the invention.

### Prior State of the Art

There are different proposals relating to adding certain conductivity features to originally non-conductive plates for several purposes. Some documents describing some of these proposals are set forth below.

Utility model ES-A-180349 proposes a tile with channels defined in one of its sides which are subsequently filled with a conductive mass forming an electric conductor circuit, for the purpose of acting as a heating device when the heat generated upon applying a voltage in said circuit is transmitted towards the rest of the tile.

Application US-A-20040109681 proposes a modular tile with a body made of clay or cement, and with an electric heating element mounted inside the body in an enveloped manner.

Patent ES-A-2127129 proposes a process for manufacturing heating resistances printed by serigraphy on base plates that are preferably made of micanite.

Patent EP1376015 relates to an electric radiator and a method for manufacturing it, formed by two or three glass panels with a resistance circuit formed by glass and silver in the form of ink, applied by serigraphy between the panels.

Patent ES-A-2221336 proposes an injected heating panel, a composition, a device and a process for manufacturing it. The panel is manufactured by injection molding, and the non-conductive part or body of the panel is formed by a mixture of resins and mineral powder mass, the heating element, which can be a conducting wire, being introduced inside the mold before introducing the powder-resin mixture, or concrete.

None of these background documents contemplates applications other than heating nor do they contemplate the possibility of defining conductors in non-conductive bodies, either tiles or panels, during the forming thereof.

On the other hand, there is an increasing need to install technical or elevated floors for the purpose of enabling the passage of several classes of pipelines under them, such as those relating to electric, computer or telephone conduits, as well as for creating enough space for cooling the air comprised between said elevated floors and the floor on which they are arranged.

It is necessary for said floors to have a good system for discharging the static electricity tending to accumulate precisely due to the mentioned passage of electric wiring under said elevated floors, as well as to other reasons.

A proposal of such elevated floors is described in document ES-A-1059464, relating to an elevated screwed steel access flooring filled with mortar. Said flooring is formed by a steel tile filled with mortar and a pedestal or static element to be arranged between the floor and a series of similar tiles, the pedestal making contact with the steel of the tiles such that the correct discharge of static electricity therefrom is enabled.

Patent GB-A-1425977 proposes a panel for elevated floors which comprises, for the purpose of electrostatically discharging the persons and objects on the floor, covering a non-conductive core of the panel with a flexible carpet introduced through the edges of said core until making contact with a metal plate fixed to the bottom surface of the non-conductive core electrostatically discharging said carpet.

The conductive contact areas are not distributed homogeneously, or according to predetermined distribution, along the entire tile or panel in either of the last two mentioned background documents, rather they are located at specific points.

A proposal which does contemplate distributing the conductive areas in an initially homogenous manner is that described in US patent application US-A-20050208746, relating to an electrically conductive tile manufactured from materials based on conductive resins formed by conductive powder microparticles, conductive fibers, or a combination of both in a resin base or body. It is proposed to mix all the conductive and non-conductive components and form a tile with the mixture by injection molding for example.

Although said US patent application achieves the uniform distribution of the conductive areas throughout the entire tile, enabling a homogenous static electricity discharge which is virtually identical whichever the point of the tile connected to ground, the mentioned homogeneous distribution of the conductive particles is random, i.e. it does not define predetermined conductive paths from the top surface of the tile to the bottom surface in desired areas, rather random paths are formed.

### Description of the Invention

It seems to be necessary to offer an alternative to the state of the art in form of a conductive plate, as well as a method and a machine for manufacturing said conductive plate such that it enables a good static electricity discharge therethrough, by means of, unlike the last mentioned background document, predetermined and direct conductive paths from the top surface to the bottom surface of the plate, and furthermore only in desired areas, said conductive paths being usable for other applications apart from the mentioned static electricity discharge, by means of forming an electric circuit by connecting some of said conductive paths to one another, or with other conductors circulating under the plate for example, following a prior circuit diagram or design.

For this purpose, in a first aspect, the present invention relates to a method for manufacturing of conductive plates, applicable for covering of floors or walls, comprising the following steps which are carried out sequentially:
a) carrying out a polymer concrete mixture or mortar,
b) introducing said mortar in a hollow mold with a shape of one of said plates to be obtained when said mortar solidifies,
c) making at least one, although preferably a plurality of through holes on said mortar deposited in said mold with a homogeneous or predetermined distribution, and
d) injecting an electrically conductive ink in said through hole or holes.
   The mentioned steps c) and d) are carried out successively with the same tool provided with a series of injection needles at the start or during the gelling of said mortar, after which a step e) of curing said polymer concrete is carried out.
   Although the previous steps have been described for one plate, the method comprise carrying out all the steps, the previous steps and those described below, to obtain a plurality of conductive plates.
   After the mentioned curing of said step e) the method comprises carrying out the following steps:
f) demolding the plate from said mold once it has solidified, and
g) depositing the plate or plates in an oven or chamber and controlling its or their thermal conditions, generally by means of a corresponding heating, so as to carry out a post-curing of the polymer concrete forming it or them.

For one embodiment, the method comprises carrying out said heating of said step g) for a temperature of approximately 60° and for a time period of approximately 12 hours.

After said step g), the method comprises removing the plate or plates from said oven and carrying out a step g1) of calibrating and polishing the plates to obtain the desired dimensions and the desired texture and luster appearance, respectively.

In order to carry out said mixture of said step a), the method comprises adding thermosetting resins and mineral fillers, as well as cross-linking elements and catalysts, and for one embodiment, also colored sand with fluorescent pigments for the purpose of obtaining a sign in low luminous intensity situations.

Although the mixed components and proportions of the materials used to manufacture the mortar can vary, for one embodiment the added elements for forming the polymer concrete mixture or mortar represent the following percentage of the final composition:
18% orthophthalic polyester resin,
1% cross-linking elements and catalysts, and
81 % quartz sand and colored quartz from 0.06 mm to 0.8 mm.

For one embodiment, the mixture of step a) is carried out by means of a polymer concrete mixer by means of which a polymer concrete mortar is produced through a process for mixing and homogenizing the different mentioned ingredients forming the compound formulation. Said mixture is carried out when the different components are incorporated in a mixing chamber, a perfect homogenization being obtained by mechanical or pneumatic means.

Once the mortar has been obtained by means of mixing the mentioned ingredients, the method comprises carrying out the mentioned step b) for each plate, introducing the mortar in the mold by means of casting, and moving and making the mold vibrate in a controlled manner by means of an automated mechanical system.

The object of the mold is to provide the plate with the desired shape, either as a sheet, a tile or a lining panel. The molds can be made of any material provided that they offer the mechanical strength and the thermal and chemical resistance required by said process.

For one embodiment, said molds move on a conveyor, such as a carousel, allowing each mold to go through the different steps of the method from the casting of the mortar to its demolding.

After said step g1), the method comprises carrying out a step h) consisting of carrying out quality control on the plate obtained in order to ensure that it meets at least a series of mechanical, thermal and conductive requirements.

As regards the ink injected in said step d), in a preferred embodiment such ink comprises a combination of silver and/or carbon graphite conductive inks, formulated so as to obtain a desired conductivity or conduction which, for one embodiment, are in the following proportions so as to obtain the final composition of the ink to be injected: 35% carbon ink and 65% silver ink.

For one embodiment, the method comprises making said holes and carrying out said ink injections of steps c) and d) by means of an automatic punching system formed by a set of injecting needles connected to a dosing pump.

For another embodiment the method comprises making some holes and corresponding ink injections by carrying out said steps c) and d) by means of an automatic punching system formed by a set of injecting needles, each connected to a syringe with a respective ink tank, removing said set of needles from the polymer concrete, moving said set of needles in a direction substantially parallel to the plane of a superior face of said polymer concrete, and then make other holes and corresponding ink injections by carrying out other steps c) and d) by means of said automatic punching system.

After carrying out said step d), the method also comprises removing said set of needles from the polymer concrete, and then carrying out a first step of cleaning the needles which, for one embodiment, comprises externally applying a demolding liquid on the needles to clean them each time they have been used with a conductive plate.

The method also comprises a second step of cleaning the needles consisting of circulating a solvent liquid inside the needles to clean them internally after they have been used with a plurality of conductive plates.

In a second aspect, the present invention relates to a conductive plate which can be obtained by means of applying the method according to the first aspect of the invention, which plate, for one embodiment, forms a tile adapted to be assembled on a floor, particularly an elevated floor; and for another embodiment, it forms a panel or lining adapted to be assembled, attached or leaving an intermediate space, in a wall.

A third aspect of the present invention relates to an injecting machine which is adapted for applying part of the proposed method according to the first aspect of the invention, specifically steps c) and d), as well as those relating to the operations to be carried out with the mentioned injecting needles, relating to the main perforating and injection operation, i.e. steps c) and d), and to auxiliary operations such as the previously described cleaning steps.

Said machine will be described in detail in a subsequent section of this specification.

### Brief Description of the Drawings

The previous and other advantages and features will be more fully understood from the following detailed description of several embodiments with reference to the attached drawings which must be considered by way of an illustrative and non-limiting example and in which:

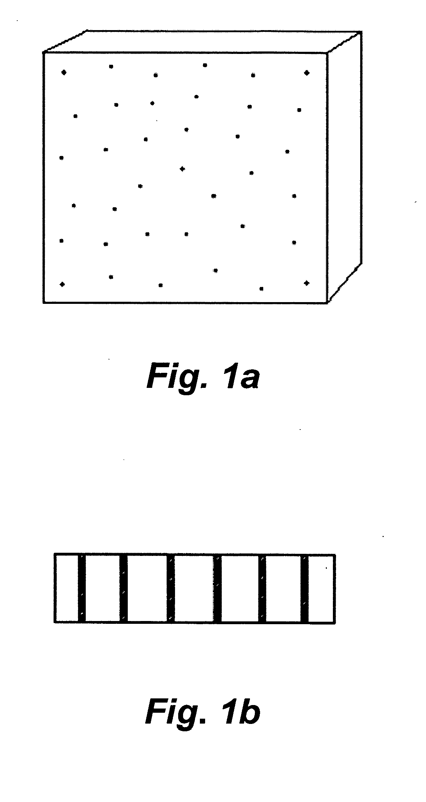

Figure 1 a shows a perspective view of a tile manufactured according to the method proposed by the present invention,
Figure 1 b shows an elevational view of the tile of Figure la sectioned transversely,
Figure 2 shows a sectioned and side elevational view of the injecting machine proposed by the third aspect of the present invention, and
Figure 3 shows a sectioned and front elevational view of the machine of Figure 2.

### Detailed Description of Several Embodiments

This section will describe the machine proposed by the third aspect of the present invention, adapted to carry out part of the method proposed by the first aspect for manufacturing a plate such as that proposed by the second aspect, an example of which can be seen in Figures la and 1b, in the form of a tile, the dots on the surface of said tile (see Figure la) being indicative of the through holes or paths through the mass of the tile (see Figure 1b) filled with conductive ink according to the proposed method, the representation of said conductive paths being exaggerated because they generally have an approximate diameter between 0.8 and 1 mm.

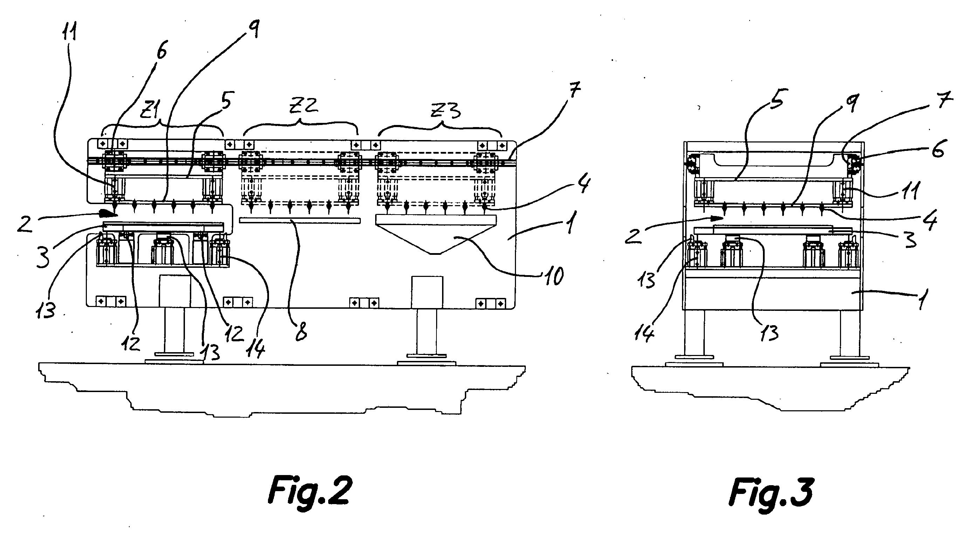

The injecting machine proposed by the third aspect of the present invention is shown, for an embodiment, by respective views in Figures. 2 and 3, and comprises:
- a support structure 1 with a receiving inlet 2 for receiving each 3 of said molds filled with polymer concrete,
- an automatic punching system formed by a set of injecting needles 4 connected to conductive ink supply means, for making through holes through said mortar deposited in said mold 3, and injecting an electrically conductive ink in said holes,
- at least one mobile bearing member 5 for bearing said set of needles 4 and configured to move in two directions, by means of first actuation means between at least a first area Z1, or injection area, in which the needles 4 are located on said mold 3 located in said receiving inlet 2, and a second area Z2 for carrying out auxiliary operations, far from said first area Z1, and
- a supporting head 9 for supporting said set of needles 4, which can move in an upward-downward run with respect to said carriage 5 by means of second actuation means which, for the embodiment shown, comprises cylinders 11, pneumatic cylinders for example, pushing said head 9 and moving it downwards when they are actuated, this movement being a perpendicular movement with respect to the mold 3 for the embodiment shown, and then when the cylinders retract, they raise the head 9.

For the embodiment shown in Figures 2 and 3 said mobile bearing member 5 is a bearing carriage 5 with guide member 6 coupled to a guide configuration 7 of the support structure 1 to move said carriage 5 therealong in said two directions.

For a preferred embodiment said automatic punching system formed by said set of injecting needles 4 is adapted for making, according to a predetermined distribution, a plurality of through holes through said mortar deposited in said mold 3 and injecting said electrically conductive ink in said holes.

In Figs. 2 and 3 there is shown a predetermined distribution of needles 4 (and consequently of holes) according to a square grid formed by different rows of needles 4 which are injected into the mortar at a time.

For an embodiment said conductive ink supply means comprise a conductive ink dosing pump (not shown) connected to said set of injecting needles 4.

Said receiving inlet 2 of said support structure 1 is associated to a conveyor for said molds filled with polymer concrete, adapted to move the molds until one of them, indicated by reference number 3 in Figures 2 and 3, is located in the receiving inlet 2, so as to stop the movement until step d) has been carried out, and to then restart the movement for making the mold 3 with concrete already injected with ink leave the receiving inlet 2 and a new mold occupy said receiving inlet 2.

For the embodiment shown, the mentioned conveyor comprises a series of rollers that are aligned forming two rows traversing said receiving inlet 2, a roller 12 of each row being observed in Figure 2.

For the purpose of not exerting pressure on the mentioned rollers 2 when the needles 4 perforate the concrete of the mold 3, the machine comprises a series of L-shaped angles or supports, indicated with reference number 13 in Figures 2 and 3, which angles or supports are pushed upwards so as to hold the mold 3, thus offering a stable base therefore, after which steps c) and d) of the method can be carried out, ensuring that the mold does not move during said steps and that therefore the holes have a great precision.

For the embodiment shown in Figures 2 and 3, said supports 13 are pushed by cylinders 14, pneumatic cylinders for example, forming part of third actuation means.

It can be observed in Figure 2 how the proposed machine comprises, in the mentioned second area Z2, an element adapted to be used for carrying out said first step of externally cleaning the needles 4 described in a previous section, which element is a sponge 8 impregnated in demolding liquid for the embodiment shown, which sponge is located under the needles 4 once they have reached the second area Z2, so that by means of a corresponding downward movement of said supporting head 9 for supporting the needles 4, said demolding liquid is applied to the needles 4 so as to externally clean them of the concrete which might be adhered upon carrying out steps c) and d) of the method.

The movement between the first area Z1 and the second area Z2 is preferably carried out each time a step c) and a step d) is carried out on a plate to be formed, the carriage 5 again moving from the second area Z2 to the first area Z1 after the needles 4 have been externally cleaned.

The mentioned guide members 6, the mentioned guide configuration 7 (which is a rail in the embodiment shown in Figure 2) and the mentioned first actuation means are adapted to cooperate to also move the carriage 5 to and from a third area Z3 in which other auxiliary operations are carried out, as can be seen in Figure 2.

It is necessary to emphasize that although three carriages 5 can be seen in Figure 2, each of them in one of said areas Z1, Z2 and Z3, there is really only carriage 5, the three carriages shown being representations of the three possible positions that can be adopted by the carriage 5, one of them with a continuous line (the real position of the carriage 5 in said Figure 2, i.e. the first area Z1), and the other two with a dotted line, for the other two areas Z2 and Z3.

The proposed machine comprises in said third area Z3 a series of devices adapted to be used for carrying out said second step of cleaning the needles 4, one of which devices is a supply source (not shown) for supplying a solvent liquid which is circulated through the needles 4, once they have been located in the third area Z3 and in communication with said source, so that they can thus be internally cleaned when it is considered to be appropriate, for example after a certain number of operative cycle or steps c) and d) carried out on various molds 3 filled with polymer concrete.

For the embodiment shown in Figure 2, the proposed machine also comprises another of said devices arranged in the third area Z3, which device is a hopper 10 the function of which is to collect the solvent liquid once it has circulated through the needles 4.

The proposed machine comprises a control system (not shown) adapted to activate said first, said second and said third actuation means.

The mentioned control system is adapted to activate the second actuation means to:
- when said carriage 5 is in the injection area Z1, move the supporting head 9, and with it the needles 4, towards one 3 of said molds so as to carry out steps c) and d), and remove them from the mold 3 when step d) has ended, and
- when said carriage 5 is in said second area Z2, move the supporting head 9, and with it the needles 4, towards said sponge 8 so as to carry our said demolding liquid application and remove them from the sponge 8 after a certain time period.

The proposed machine comprises fourth actuation means adapted to connect the needles 4 to said supply source (not shown) for supplying solvent liquid and activate the supply source to internally clean the needles 4 when said carriage is in said third area Z3.

It must be emphasized that the movement of the carriage 5 along the guide configuration 7 to go from one area to another Z1, Z2, Z3, is carried out when it is in the position indicated in Figure 2, i.e. it is upwards, without contact with the plate or other mechanism located thereunder.

For another embodiment, not shown, the mentioned conductive ink supply means comprise individualized ink supply systems for each injecting needle 4 of said set of injecting needles 4, which for a variant of said embodiment comprises a syringe with or connected to an ink tank, said tanks containing equal or different types of inks.

The control system proposed by the method of the present invention is adapted to activate said first and said second actuation means, to select the needles 4 to be used to achieve a predetermined distribution of holes, and to control said individualized ink supply systems to regulate the ink flow rate to be supplied to each of the selected needles 4.

For an embodiment said supporting head 9 can move also in a plane parallel to a base wall of said mold 3 and in a direction perpendicular to the movement directions of said mobile bearing member 5.

For the last paragraph embodiment, not shown, the supporting head 9 holds up only a row of needles 4, and in order to achieve said predetermined distribution of needles 4 (and consequently of holes), after one injection has been made, it is needed to remove said set of needles 4 from the polymer concrete, moving said supporting head 9 in said direction substantially parallel to said base wall of the mold 3, and make other injections with said row of needles 4, so obtaining, for example, a square grid of ink filled holes with just one row of needles 4.

For a variant of said embodiment said supporting head 9 is connected to a pantographic system controllably operated by said control system, being said mobile bearing member 5 a bearing robotic arm 5 comprised by said pantographic system, and being said supporting head 9 carried by an end of said bearing arm 5 which can also move in said plane parallel to said base wall of said mold 3 to move the supporting head 9, i.e. the robotic arm is responsible for all the movements, the ones related to the transport of the set of needles 4 to the different zones Z1, Z2, Z3 of the machine and the ones related to movements of the needles 4 for the injection operations, even when displacing a row of needles 4 to achieve said square grid of ink filled holes with just one row of needles 4.

In order to achieve a wider variety of predetermined distribution of holes, in the machine proposed by the present invention said set of needles 4 is interchangeable by other set of needles 4 with different dimensions (for example needle diameters).

For a more accurate embodiment even each individual needle 4 can be interchanged by other with different dimensions.

As mentioned previously, the conductive plates obtained, either tiles, sheets or lining panels, in addition to eliminating electrostatic charges, allow carrying out one or several electric circuits, or a part thereof, by means of a predetermined connection, according to a previous design, of one or more of the conductive paths formed by each of the holes filled with conductive ink.

Said electric circuits can thus be used for electric, computer and telephone applications.

A person skilled in the art could introduce changes and modifications in the described embodiments without departing from the scope of the invention as it is defined in the attached claims.

## Claims

1. A method for manufacturing conductive plates, applicable for covering floors or walls, comprising at least carrying out the following steps sequentially:
a) carrying out a polymer concrete mixture or mortar,
b) introducing said mortar in a hollow mold with a shape of one of said plates to be obtained when said mortar solidifies,
c) making at least one through hole through said mortar deposited in said mold, and
d) injecting an electrically conductive ink in said at least one hole.

2. A method according to claim 1, **characterized in that** it comprises carrying out said steps c) and d) for a plurality of through holes according to a predetermined distribution.

3. A method according to claim 2, **characterized in that** said steps c) and d) are carried out at the start or during the gelling of said mortar.

4. A method according to any of the previous claims, **characterized in that** it comprises a step e) of curing said polymer concrete after said step d).

5. A method according to claim 4, **characterized in that** it comprises carrying out the following steps, after said step e):
f) demolding the plate from said mold once it has solidified, and
g) depositing the plate in an oven or chamber and controlling the thermal conditions of the plate for a certain time period maintaining substantially the same temperature, so as to carry out a post-curing of the polymer concrete forming it.

6. A method according to claim 5, **characterized in that** it comprises carrying out said control of the thermal conditions of the plate of said step g) by carrying out a heating of the plate, for a temperature of approximately 60° and for a time of approximately 12 hours.

7. A method according to claim 5, **characterized in that** it comprises, after said step g), removing said plate from said oven and carrying out a step g1) of calibrating and polishing the plate to obtain the desired dimensions and the desired texture and luster appearance, respectively.

8. A method according to claim 1, **characterized in that** said step b) comprises introducing said mortar in said mold by means of casting, and moving and making the mold vibrate in a controlled manner by means of an automated mechanical system.

9. A method according to claim 7, **characterized in that**, after said step g1), it comprises carrying out a step h) consisting of carrying out quality control on the plate obtained in order to ensure that it meets at least a series of mechanical, thermal and conductive requirements.

10. A method according to claim 1, **characterized in that** it comprises adding at least thermosetting resins and mineral fillers for carrying out said mixture of said step a).

11. A method according to claim 10, **characterized in that** it also comprises adding cross-linking elements and catalysts for carrying out said mixture of said step a).

12. A method according to claim 11, **characterized in that** it comprises adding colored sand with fluorescent pigments for carrying out said mixture of said step a).

13. A method according to claim 12, **characterized in that** the added elements for forming said polymer concrete mixture or mortar represent the following percentage of the final composition:
18% orthophthalic polyester resin,
1% cross-linking elements and catalysts, and
81% quartz sand and colored quartz from 0.06 mm to 0.8 mm.

14. A method according to claim 1, **characterized in that** said ink injected in said step d) comprises a combination of silver and/or carbon graphite conductive inks, formulated so as to obtain a desired conductivity or conduction.

15. A method according to claim 14, **characterized in that** said formulation of said ink injected in step d) is the following: 35% carbon ink and 65% silver ink.

16. A method according to any of the previous claims, **characterized in that** it comprises carrying out all the steps to obtain a plurality of conductive plates.

17. A method according to claim 16, **characterized in that** it comprises making said holes and carrying out said ink injections of said steps c) and d) by means of an automatic punching system formed by a set of injecting needles connected to a dosing pump.

18. A method according to claim 16, **characterized in that** it comprises making some holes and corresponding ink injections by carrying out said steps c) and d) by means of an automatic punching system formed by a set of injecting needles, each connected to a syringe with a respective ink tank, removing said set of needles from the polymer concrete, moving said set of needles in a direction substantially parallel to the plane of a superior face of said polymer concrete, and then make other holes and corresponding ink injections by carrying out other steps c) and d) by means of said automatic punching system.

19. A method according to claim 17, **characterized in that** it comprises, after carrying out said step d), removing said set of needles from the polymer concrete, and then carrying out at least a first step of cleaning the needles.

20. A method according to claim 19, **characterized in that** said first step of cleaning the needles comprises applying a demolding liquid on the needles to at least externally clean them each time they have been used with a conductive plate.

21. A method according to claim 20, **characterized in that** it comprises a second step of cleaning the needles consisting of circulating a solvent liquid inside said needles to clean them internally after they have been used with a plurality of conductive plates.

22. A conductive plate **characterized in that** it is formed by a solidified polymer concrete mixture or mortar with at least one through hole filled with an electrically conductive ink.

23. A conductive plate according to claim 22, **characterized in that** said polymer concrete mixture or mortar has a plurality of through holes filled with an electrically conductive ink, said holes being distributed along the plate according to a predetermined distribution.

24. A conductive plate according to claim 23, **characterized in that** it forms a tile adapted to be assembled on a floor.

25. A conductive plate according to claim 23, **characterized in that** it forms a panel adapted to be assembled, attached or leaving an intermediate space, in a wall.

26. A conductive plate according to any of claims 22 to 25, **characterized in that** it is obtained by means of applying the method according to any of claims 1 to 21.

27. An injecting machine for manufacturing conductive plates, applicable for covering floors or walls, **characterized in that** it comprises:
- a support structure (1) with a receiving inlet (2) for receiving at least one (3) mold filled with polymer concrete or mortar,
- an automatic punching system formed by a set of injecting needles (4) connected to conductive ink supply means, for making at least one through hole through said mortar deposited in said mold (3), and injecting an electrically conductive ink in said at least one hole,
- at least one mobile bearing member (5) for bearing said set of needles (4) and configured to move in two directions, by means of first actuation means between at least a first area (Z1), or injection area, in which the needles (4) are located on said mold (3) located in said receiving inlet (2), and a second area (Z2) for carrying out auxiliary operations, far from said first area (Z1), and
- a supporting head (9) for holding up said set of needles (4), which can move in an upward-downward run with respect to said carriage (5) by means of second actuation means.

28. An injecting machine according to claim 27, **characterized in that** said mobile bearing member (5) is a bearing carriage (5) with at least one guide member (6) coupled to at least one guide configuration (7) of the support structure (1) to move said carriage (5) therealong in said two directions.

29. An injecting machine according to claim 27 or 28, **characterized in that** said automatic punching system formed by said set of injecting needles (4) is adapted for making, according to a predetermined distribution, a plurality of said through holes through said mortar deposited in said mold (3) and injecting said electrically conductive ink in said holes.

30. An injecting machine according to claim 29 when it depends on claim 28, **characterized in that** said conductive ink supply means comprise a conductive ink dosing pump connected to said set of injecting needles (4).

31. An injecting machine according to claim 29 when it depends on claim 27, **characterized in that** said conductive ink supply means comprise individualized ink supply systems for each injecting needle (4) of said set of injecting needles (4).

32. An injecting machine according to claim 31, **characterized in that** each of said individualized ink supply systems comprises a syringe with or connected to an ink tank, said tanks containing equal or different types of inks.

33. An injecting machine according to claim 31 or 32, **characterized in that** it comprises a control system adapted to activate said first and said second actuation means, to select the needles (4) to be used to achieve a predetermined distribution of holes, and to control said individualized ink supply systems to regulate the ink flow rate to be supplied to each of the selected needles (4).

34. An injecting machine according to claim 33, **characterized in that** said supporting head (9) can move also in a plane parallel to a base wall of said mold (3) and in a direction perpendicular to the movement directions of said mobile bearing member (5).

35. An injecting machine according to claim 34, **characterized** said supporting head (9) is connected to a pantographic system controllably operated by said control system.

36. An injecting machine according to claim 35, **characterized in that** said mobile bearing member (5) is a bearing robotic arm (5) comprised by said pantographic system, being said supporting head (9) carried by an end of said bearing arm (5) which can also move in said plane parallel to said base wall of said mold (3) to move the supporting head (9).

37. An injecting machine according to any of claims 27 to 36, **characterized in that** said set of needles (4) is interchangeable by other set of needles (4) with different dimensions in order to achieve different predetermined distribution of holes.

38. A machine according to claim 27 or 28, **characterized in that** said receiving inlet (2) of said support structure (1) is associated to a conveyor for said molds filled with polymer concrete, adapted to move the molds until one (3) of them is located in the receiving inlet (2), so as to stop the movement until step d) has been carried out, and to then restart the movement for making the mold (3) with concrete already injected with ink leave the receiving inlet (2) and a new mold occupy said receiving inlet (2).

39. A machine according to claim 27 or 28, **characterized in that** it comprises in said second area (Z2) at least one element adapted to be used to carry out a first step of cleaning the needles (4).

40. A machine according to claim 39, **characterized in that** said at least one element is a sponge (8) impregnated in demolding liquid, located under the needles (4) once they are in the second area (Z2), so that by means of a corresponding downward movement of said supporting head (9) for holding up the needles (4), said demolding liquid is applied to the needles (4).

41. A machine according to claim 28, 39 or 40, **characterized in that** said at least one guide member (6), said at least one guide configuration (7) and said first actuation means are also adapted to move said carriage (5) to and from a third area (Z3) in which other auxiliary operations are carried out.

42. A machine according to claim 41, **characterized in that** it comprises in said third area (Z3) at least one device adapted to be used to carry out a second step of cleaning the needles (4).

43. A machine according to claim 42, **characterized in that** it comprises at least two of said devices, one of which is a solvent liquid supply source for, once the needles (4) are in the third area (Z3) and by means of a corresponding communication of the supply source with the needles (4), supplying and make to circulate said solvent liquid through the needles (4) inside, and the other of which devices is a hopper (10) located under the needles (4) to receive the solvent liquid once it has circulated inside the needles (4).

44. A machine according to claim 28 or any of claims 39 to 43, **characterized in that** it comprises a control system adapted to activate said first and said second actuation means.

45. A machine according to claim 44, **characterized in that** said control system is adapted to activate the second actuation means to:
- when said carriage (5) is in the injection area (Z1), move the supporting head (9), and with it the needles (4), towards one (3) of said molds so as to making said at least one through hole through said mortar deposited in said mold and the corresponding ink injection, and then remove them from the mold (3) by raising the head (9) when said injection has ended, and
- when said carriage (5) is in said second area (Z2), move the supporting head (9), and with it the needles (4), towards said sponge (8) so as to carry out said demolding liquid application and then remove them from the sponge (8) by raising the head (9) after a certain time period.

46. A machine according to claim 44 when depends on claim 43, **characterized in that** it comprises fourth actuation means, and **in that** said control system is adapted to activate said fourth actuation means to connect the needles (4) to a supply source for supplying solvent liquid and activate the supply source to internally clean the needles (4) when said carriage (5) is in said third area (Z3).

47. An injecting machine according to any of claims 27 to 46, **characterized in that** it is adapted for applying the method according to any one of claims 17 to 21.
